# EUROPÄISCHE PATENTSCHRIFT

(11) **EP 1 975 193 B1**
(45) Veröffentlichungstag und Bekanntmachung des Hinweises auf die Patenterteilung: **18.09.2013**
(21) Anmeldenummer: 08003418.4
(22) Anmeldetag: 26.02.2008
(51) Int. Cl.: C08G 77/26, D06M 15/65

(54) **Polysiloxan und Textilhilfsmittel enthaltend ein Polysiloxan**
Polysiloxane and textile aid containing a polysiloxane
Polysiloxanes et adjuvant textile comprenant du polysiloxane

(30) Priorität: 28.03.2007 DE 102007015372
(43) Veröffentlichungstag der Anmeldung: 01.10.2008
(73) Patentinhaber: CHT R. BEITLICH GmbH, 72072 Tübingen (DE)
(72) Erfinder: Will, Peter, 72810 Gomaringen (DE); Nickel, Friedhelm, 72072 Tübingen (DE)
(74) Vertreter: Winter, Martina

(56) Entgegenhaltungen:
- EP-A- 0 282 720
- DE-A1- 10 036 678
- US-A1- 2004 219 371

## Beschreibung

Die vorliegende Erfindung betrifft ein Polysiloxan nach dem Oberbegriff des Patentanspruchs 1 sowie ein Textilhilfsmittel mit einem derartigen Polysiloxan.

In der EP 1 000 959 A2 werden polyetherquatfunktionelle Polysiloxane beschrieben, welche in Zubereitungen zur Verbesserung der Oberflächeneigenschaften von Geweben und Fasern eingesetzt werden. Bei dieser Stoffklasse handelt es sich um Polysiloxane, bei denen die Si-Atome mindestens einen Polyetherrest und mindestens einen Rest mit einem quartären Stickstoffatom tragen, wobei das Gegenion ein Anion einer anorganischen oder organischen Säure ist. Derartige Verbindungen eignen sich als Textilhilfsmittel für Substrate aus bspw. Baumwolle, Polyester oder auch Leder, welche dem Material einen guten Weichgriff und eine geringere Vergilbungsneigung verleihen. Besonders erwünscht, aber in nicht befriedigendem Maße, realisiert sind hierbei eine gute Permanenz, d.h. Verweildauer auf der Faser und eine gute Handhabbarkeit, d.h. eine nicht zu hohe Viskosität.

Zur Lösung dieses Problems werden in der DE 102 14 982 A1 ein gattungsgemäßes Polysiloxan sowie ein Textilhilfsmittel enthaltend ein gattungsgemäßes Polysiloxan beschrieben. Die gattungsgemäßen Polysiloxane weisen neben mindestens einem quartären Stickstoffatom noch mindestens einen Epoxyrest auf. Mit dem Epoxyrest kann das gattungsgemäße Polysiloxan auf der Faser quervernetzt werden. Damit erhält man eine verbesserte Permanenz, d.h. die Substanz kann von der Faser nicht mehr abgewaschen werden, sowie einen sehr guten Weichgriff und eine besonders angenehme Tragephysiologie. Die gattungsgemäßen Polysiloxane sind für alle Natur- und Kunstfasern geeignet, die mit Epoxiden reagieren können, die also bspw. OH-Reste bzw. NH-Reste aufweisen. Die Seitenketten der Reste R₂ und R₃ sorgen für eine gewisse sterische Hinderung, die bewirkt, dass die Viskosität der erfindungsgemäßen Verbindungen herabgesetzt wird, so dass die Handhabung verbessert wird.

In der Praxis hat sich herausgestellt, dass die gattungsgemäßen Polysiloxane Unverträglichkeiten gegenüber Polyanionen und anionischen Hilfsmitteln aufweisen. Derartige Polyanionen und anionische Hilfsmittel sind bspw. in Farbstoffen, optischen Aufhellern enthalten. Wenn die gattungsgemäßen Polysiloxane auf ein Gewebe bzw. eine Faser appliziert werden, kann es daher vorkommen, dass derartige Polyanionen und anionische Hilfsmittel in die Flotte eingeschleppt werden. In diesem Fall können sich Kation-Anion-Komplexe bilden, die ausgefällt werden und sich auf dem Gewebe bzw. der Faser niederschlagen. Diese Niederschläge können fest oder ölig, farblos oder farbig sein.

Die Aufgabe der vorliegenden Erfindung besteht darin, die gattungsgemäßen Polysiloxane so weiter zu entwickeln, dass die Verträglichkeit mit Anionen, insbesondere Polyanionen und anionischen Hilfsmitteln, verbessert wird.

Die Lösung besteht in Polysiloxanen mit den Merkmalen des Anspruchs 1 sowie Textilhilfsmitteln mit den Merkmalen des Patentanspruchs 6. Erfindungsgemäß ist also vorgesehen, dass zwischen dem Si-0-Rückgrat des Polysiloxans und mindestens einem Epoxyrest ein Polyetherrest vorgesehen ist. Dieser Polyetherrest fungiert als hydrophiler Spacer zwischen dem Rückgrat und dem Epoxyrest. Er bewirkt, dass die sich ggf. bildenden Kation-Anion-Komplexe nicht mehr ausgefällt, sondern in der Flotte dispergiert werden. Darüber hinaus hat sich überraschend gezeigt, dass die so ausgerüsteten Materialien einen noch besseren Weichgriff als bisher aufweisen.

Schließlich ist auch eine Faser oder ein Gewebe, welches mit einem solchen Textilhilfsmittel ausgerüstet oder behandelt ist, Gegenstand der vorliegenden Erfindung.

Vorteilhafte Weiterbildungen ergeben sich aus den Unteransprüchen. Insbesondere können die Werte a, b, c jeweils zwischen 0 und 15, 0 und 5 bzw. 0 und 8 liegen.

Der Anteil an Alkylresten mit 2 bis 30 C-Atomen kann bspw. gemessen an der Gesamtzahl der Reste größer als 10 Mol sein.

Die erfindungsgemäßen Polysiloxane werden vorzugsweise in Form wässriger Emulsionen eingesetzt. Ein geeignetes Verfahren zur Herstellung von feinteiligen Organopolysiloxanemulsionen ist bspw. bekannt aus U.S.-A-5,302,657. Dort wird die Emulsion mit einem in Organopolysiloxan löslichen Emulgator in zwei Schritten hergestellt, wobei im ersten Schritt ein Konzentrat erhalten wird, welches im zweiten Schritt mit Wasser verdünnt wird. Als Emulgatoren können beliebige für die Herstellung von organofunktionellen Polysiloxanemulsionen verwendbare Emulgatoren eingesetzt werden.

Als nichtionische Emulgatoren eignen sich besonders Alkylpolyglycolether, vorzugsweise solche mit 4 bis 40 Ethylenoxid-Einheiten und/oder Alkylresten von 8 bis 20 C-Atomen; Alkylarylpolyglycolether, vorzugsweise solche mit 4 bis 40 Ethylenoxid-Einheiten und/oder 8 bis 20 C-Atomen in den Alkylresten; Ethylenoxid/Propylenoxid-Blockcopolymere, vorzugsweise solche mit 4 bis 40 Ethylenoxid- und/oder Propylenoxid-Einheiten; gesättigte und ungesättigte Fettsäuren mit 6 bis 24 C-Atomen; Naturstoffe und deren Derivate wie Lecithin, Lanolin, Saponine, Cellulose; Cellulosealkylether und Carbooxyalkylcellulosen, deren Alkylgruppen jeweils bis zu 4 C-Atome besitzen; polare Gruppen, insbesondere Polyethergruppen enthaltende lineare Polydiorganosiloxane; gesättigte und ungesättigte alkoxylierte Fettamine mit 8 bis 24 C-Atomen.

Geeignete kationische Emulgatoren sind bspw. Salze von primären, sekundären und tertiären Fettaminen mit 8 bis 24 C-Atomen, insbesondere mit Essigsäure, Salzsäure und Phosphorsäuren; quartäre Alkylbenzolammoniumsalze, insbesondere solche, deren Alkylgruppe 6 bis 24 C-Atome besitzt, insbesondere die Halogenide, Sulfate, Phosphate und Acetate; Alkylpyridinium-, Alkylimidazolium- und Alkyoxazoliniumsalze, insbesondere solche, deren Alkylkette bis zu 18 C-Atomen besitzt, speziell die Halogenide, Sulfate, Phosphate und Acetate.

Weitere geeignete Emulgatoren können aus der Gruppe bestehend aus Fettsäurepolyglycolestern, polyethoxylierten Fettsäureglyceriden und Sorbitanestern, Alkylpolyglycosiden, Fettsäurealkylolamiden, Alkylethercarbonsäuren, Alkarylethercarbonsäuren, ethoxilierten quartären Ammoniumsalzen, Aminoxiden, Betainen, Sulfobetainen und Sulfosuccinaten ausgewählt werden.

Die wässrige Emulsion kann als weitere Komponente eine oder mehrere anorganische und/oder organische Säuren und/oder Anhydride enthalten. Geeignet sind bspw. Salzsäure, Schwefelsäure und Phosphorsäure, aber auch Ameisensäure, Essigsäure, Glycolsäure, Aldonsäuren wie bspw. Gluconsäure, Ascorbinsäure oder Uronsäuren wie bspw. Glucuronsäure. Als mehrbasige Säure können z. Bsp. eingesetzt werden Oxalsäure, Zitronensäure oder Aldarsäuren wie Glucar- oder Schleimsäure. Als Beispiel für ein Anhydrid einer organischen Säure ist Essigsäureanhydrid zu nennen.

Die wässrige Emulsion kann ferner als weitere Komponente ein Hydrotropikum enthalten, welches bspw. aus der Gruppe der polyfunktionellen Alkohole ausgewählt werden kann. So können Dialkohole mit 2 bis 10, bevorzugt 2 bis 6, insbesondere jedoch 2 bis 4 Kohlenstoffatomen pro Molekül eingesetzt werden. Gut geeignet sind auch deren Mono- und Diether sowie die Mono- und Diester dieser Dialkohole. Besonders bevorzugt zu verwendende Substanzen sind bspw. 1,2-Propylenglycol, Dipropylenglycol und Butyldiglycol.

Die Zubereitungen der erfindungsgemäßen Polysiloxane können zur Erzielung weiterer textiltechnischer Effekte auch mit herkömmlichen Ausrüstungsmitteln kombiniert werden. Geeignete Komponenten sind hierbei Polyethylenverbindungen, Fettsäurekondensationsprodukte, sowie andere Organosiloxane.

Eine bevorzugte Zusammensetzung enthält 2 bis 80 Gew.-% mindestens eines erfindungsgemäßen Polysiloxans, 0 bis 40 Gew.-% mindestens eines Emulgators, 0 bis 5 Gew.-% mindestens einer anorganischen und/oder organischen Säure und/oder eines Säureanhydrids, 0 bis 40 Gew.-% mindestens eines üblichen Ausrüstungsmittels, 0 bis 20 Gew.-% mindestens eines Hydrotopikums, sowie 0 bis 98 Gew.-% Wasser.

Ausführungsbeispiele der vorliegenden Erfindung werden im Folgenden näher beschrieben.

### I. Herstellung der erfindungsgemäßen Polysiloxane

Zur Chemie der Polysiloxane, insbesondere zur Hydrosylilierung, wird verwiesen auf Walter Noll, Chemie und Technologie der Silicone, Verlag Chemie Weinheim, 2. neu bearbeitete Auflage 1968, ISBN: 0125207506 sowie auf Bogdan Marciniec (Hrsg.), Comprehensive Handbook of Hydrosylilation, pp.11-18, Pergamon Press 1992. Zur Quaternierung wird verwiesen auf EP 1 000 959 A1. Weitere Einzelheiten sind der DE 102 14 982 A1 zu entnehmen. Die erfindungsgemäßen Verbindungen werden im Folgenden als Quatverbindungen bezeichnet.

### a) Synthese der Allylpolyetherqlycidether

Kommerziell erhältliche Allylpolyether (bspw. erhältlich von der Fa. Clariant) mit unterschiedlichen Zusammensetzungen werden in bekannter Weise mit Epichlorhydrin umgesetzt (vgl. hierzu DE 40 03 621 A1).
In einem Vierhalskolben, versehen mit Rührer, Tropftrichter, Thermometer und Rückflusskühler, wird 1 Mol Allylpolyether vorgelegt und auf 80°C erhitzt. Nach Zugabe von 0,2 Gew.-% Zinn (IV)chlorid werden 1,5 Mol Epichlorhydrin zudosiert. Danach werden in 30minütigem Abstand noch zwei weitere Male 0,2 Gew.-% Zinn(IV)chlorid zugegeben. Die Nachreaktionszeit bei 80°C beträgt 2 Stunden. Nach anschließender Abkühlung auf Raumtemperatur werden 1,2 Mol Natriummethylat (bezogen auf Allylpolyether) als 30%ige Lösung in Methanol zudosiert, und es wird zwei weitere Stunden gerührt. Nach der Neutralisation mit verdünnter Salzsäure werden im Vakuum bei 100°C die flüchtigen Bestandteile abgetrennt. Nach der Filtration wird der Epoxiwert gemessen und durch Vergleich mit dem theoretischen Wert der Umsatz ermittelt.
In Tabelle 1 sind die eingesetzten Allylpolyether sowie der erzielte Umsatz für die daraus hergestellten Allylpolyetherglycidether zusammengefasst.

**Tabelle 1**

| Nummer | Allylpolyether | | Allylpolyetherglycidether | |
|---|---|---|---|---|
| | EO/PO/BuO | Jodzahl | Epoxiwert [%] | Umsatz [%] |
| 1 | 8/0/0 | 60 | 3,4 | 97 |
| 2 | 8/0/0 | 60 | 3,4 | 96 |
| 3 | 6/4/0 | 50 | 2,6 | 90 |
| 4 | 6/4/0 | 50 | 2,6 | 91 |
| 5 | 15/5/0 | 25 | 1,6 | 87 |
| 6 | 15/5/0 | 25 | 1,6 | 89 |
| 7 | 0/0/8 | 40 | 2,4 | 86 |
| 8 | 0/0/8 | 40 | 2,4 | 86 |

### b) Herstellung der Polyetherglycidethersiloxane

Der gemäß a) erhaltene Allylpolyetherglycidether wird in an sich bekannter Weise mit Wasserstoffsiloxanen umgesetzt (vgl. hierzu EP 1 448 648 A1).
In einem Vierhalskolben, versehen mit Rührer, Tropftrichter, Thermometer und Rückflusskühler, werden unter Stickstoff 0,1 Mol Wasserstoffsiloxan vorgelegt und auf 60°C erhitzt. Nach Zugabe von 10 ppm eines Platinkatalysators werden langsam 0,13 Mol der Allylverbindung zudosiert. Danach wird solange bei 100°C gerührt, bis der Wasserstoffwert des Siloxans nicht mehr messbar ist.
In den Tabellen 2 und 3 sind die eingesetzten Wasserstoffsiloxane und die Reaktionsprodukte mit den verschiedenen Allylpolyetherglycidethern zusammengefasst.

**Tabelle 2**

| Nummer | Wasserstoffsiloxan | | | |
|---|---|---|---|---|
| | D | D' | M' | Wasserstoffwert [%] |
| A | 80 | 2 | 2 | 0,06 |
| B | 25 | 2 | 2 | 0,17 |

**Tabelle 3**

| Nummer Allylpolyetherglycidether | Nummer Wasserstoffsiloxan | Nummer Polyetherglycidethersiloxan | Epoxiwert |
|---|---|---|---|
| 1 | A | 1A | 0,86 |
| 2 | B | 2B | 2,58 |
| 3 | A | 3A | 0,76 |
| 4 | B | 4B | 2,43 |
| 5 | A | 5A | 0,41 |
| 6 | B | 6B | 1,31 |
| 7 | A | 7A | 0,72 |
| 8 | B | 8B | 2,28 |

### c) Herstellung der erfindungsgemäßen Quatverbindungen

In einem Vierhalskolben, versehen mit Rührer, Tropftrichter, Thermometer und Rückflusskühler, wird das epoxifunktionelle Siloxan vorgelegt und auf 80°c erhitzt. Bei dieser Temperatur wird eine Mischung von 0,1 Mol Essigsäure und 0,1 Mol eines tertiären Amins, bezogen auf 0,2 Mol der Epoxigruppen des Siloxans, zudosiert. Die Nachreaktionszeit beträgt 3 Stunden. Das Produkt wird als viskoses, klares, gelbes Öl erhalten.

### II. Anwendungstechnische Beurteilung

Die nach I.c) erhaltenen quaternären Polysiloxane (Quatverbindungen) werden nach an sich bekannten Verfahren in Emulsionen überführt (vgl. hierzu bspw. US 5,302,657).

In Tabelle 4 sind die verwendeten quaternären Polysiloxane nochmals zusammen gefasst. Das Vergleichsbeispiel entspricht dem Beispiel Nr. 3 (80/2/2-Quat) gemäß der DE 102 14 982 A1.

**Tabelle 4**

| Beispiel | Polysiloxan |
|---|---|
| C | Quat aus 1A |
| D | Quat aus 2B |
| E | Quat aus 5A |
| F | Quat aus 6B |
| G | Quat aus Vergleichsbeispiel |

Die Anionenstabilität der quaternären Polysiloxane wird an Hand der Verträglichkeit mit einem hoch affinen optischen Aufheller überprüft. Hierzu wurden von den Emulsionen gemäß den Beispielen B bis G Flotten mit 100 g/L angesetzt und mit einer Lösung von 30 g/L eines optischen Aufhellers (z. Bsp. TUBOBLANC HV) im Verhältnis 1:1 gemischt. Die Mischung wurde dann 1h bei 40°C gelagert. Das Aussehen der Flotte wurde zunächst bei Raumtemperatur und dann nach Lagerung bei 40°C beurteilt. Die Ergebnisse sind in Tabelle 5 zusammengefasst.

**Tabelle 5**

| Beispiel | Raumtemperatur | Nach 1h bei 40°C |
|---|---|---|
| C | klar | leicht opak |
| D | klar | klar |
| E | klar | leicht opak |
| F | klar | klar |
| G | trüb | Ausfällungen |

## Patentansprüche

1. Polysiloxan der allgemeinen Formel (I) 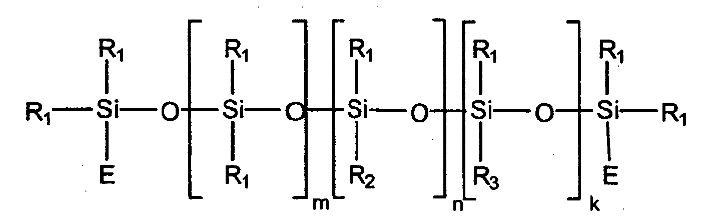 wobei m eine ganze Zahl von 5 - 200 ist,
n eine ganze Zahl von 0 - 25 ist,
k eine ganze Zahl von 1 - 25 ist,
R₁ einen aliphatischen C₁- bis C₃ - Rest oder einen Phenylrest bedeutet,
R₂ einen aliphatischen C₉ bis C₃₀ - Rest und/oder einen Polyetherrest der allgemeinen Formel (CH₂)₃O(C₂H₄O)ₓ(C₃H₆O)_{y}Q bedeutet, wobei x und y gleich oder verschieden sein können und eine ganze Zahl zwischen 0 und 50 bedeuten und Q Wasserstoff oder einen Alkylrest mit 1 bis 4 C-Atomen bedeutet,
R₃ einen Epoxyest -PY oder einen Rest MZ bedeutet,
E einen Rest MZ, R₃ oder R₂ bedeutet,
wobei pro Molekül mindestens ein Epoxyrest -PY und ein Rest MZ enthalten sind, wobei der Epoxyrest -PY einen epoxidischen Rest Y aufweist, der ausgewählt ist aus der Gruppe umfassend 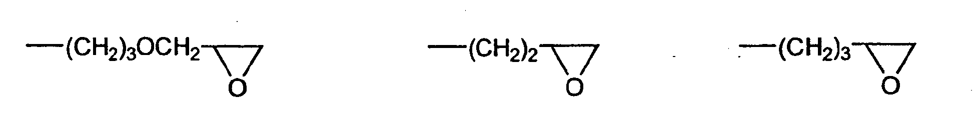 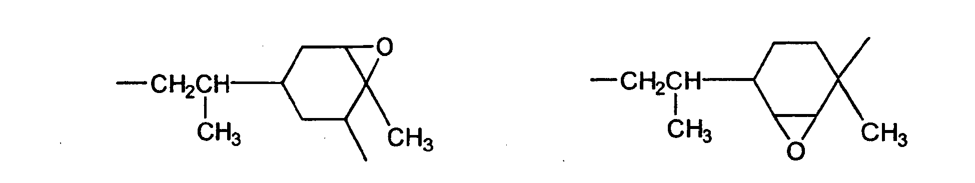 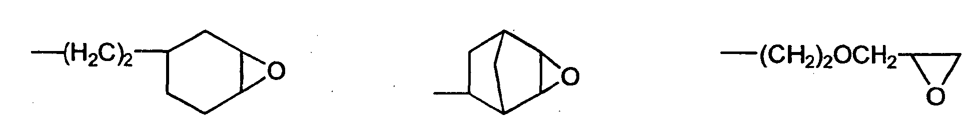 wobei der Epoxyrest -PY eine Polyetherrest P der allgemeinen Formel -(C₂H₄O)ₐ(C₃H₆O)_{b}(C₄H₈O)_{c} bedeutet, wobei a, b und c gleich oder verschieden sein können und jeweils eine ganze Zahl zwischen 0 und 20 bedeuten,
wobei M ausgewählt ist aus der Gruppe umfassend 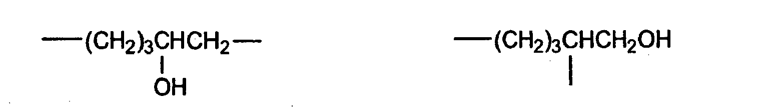 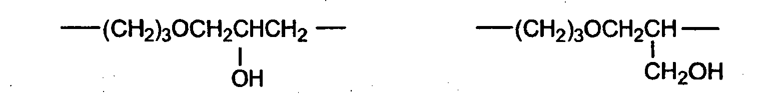 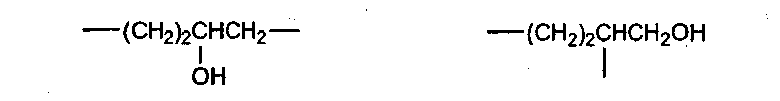 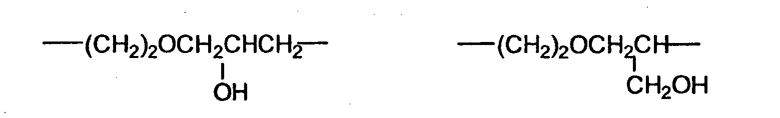 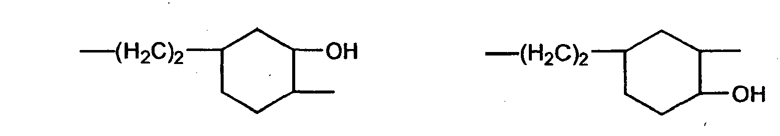 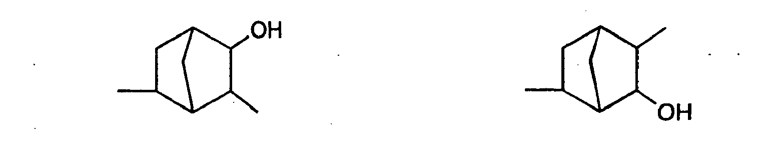 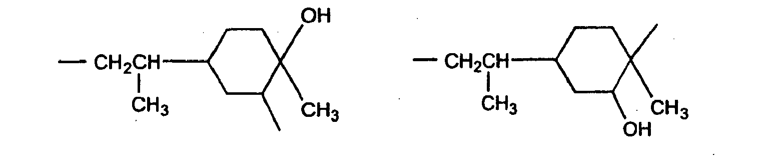 wobei Z ausgewählt ist aus der Gruppe umfassend 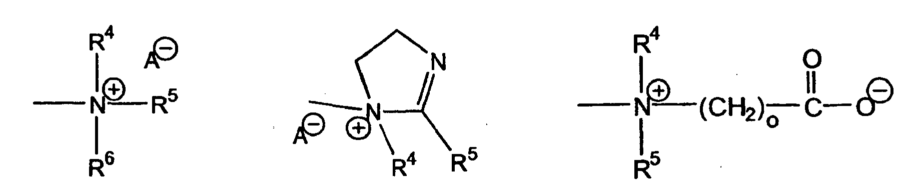 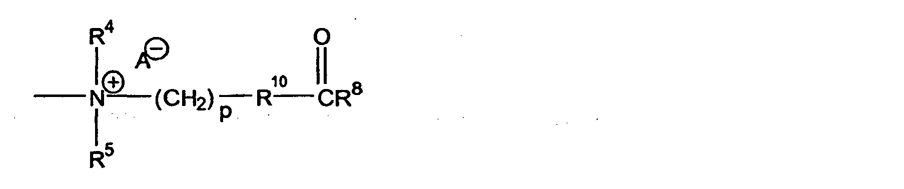 wobei das quartäre N-Atom des Restes Z mit dem Rest M über das zur C-OH-Gruppe im Rest M benachbarte Kohlenstoffatom verbunden ist,
wobei R⁴, R⁵, R⁶, gleich oder verschieden sein können und H, C₁- bis C₂₂- Alkyl, C₁- bis C₂₂- Alkenyl, bedeuten können, wobei die Alkyl- oder Alkylenreste Hydroxylgruppen aufweisen können,
wobei R⁸, R⁹ gleich oder verschieden sein können und dieselbe Bedeutung wie R⁴, R⁵, R⁶ haben oder Fluor-, Chlor- oder Brom-substituierte C₁- bis C₁₀- Alkylreste sind, wobei R¹⁰ ein -0- oder ein NR¹¹-Rest mit R¹¹ = H, C₁- bis C₄- Alkyl oder C₁- bis C₄ Hydroxyalkyl bedeutet,
wobei o eine ganze Zahl von 1 bis 4 ist,
wobei A^{⊖} ein anorganisches oder organisches Anion ist, das von einer üblichen physiologisch verträglichen Säure HX herrührt.

2. Polysiloxan nach Anspruch 1, **dadurch gekennzeichnet, dass** a eine ganze Zahl zwischen 0 und 15 bedeutet, b eine ganze Zahl zwischen 0 und 5 bedeutet und c eine ganze Zahl zwischen 0 und 8 bedeutet.

3. Polysiloxan nach Anspruch 1 oder 2, **dadurch gekennzeichnet, dass** der Anteil an C₂- bis C₃₀-Alkylresten gemessen an der Gesamtzahl der Reste größer als 10 Mol-% ist.

4. Polysiloxan nach einem der vorhergehenden Ansprüche, **dadurch gekennzeichnet, dass** R₂ einen aliphatischen C₁₀- bis C₂₀ - Rest bedeutet.

5. Polysiloxan nach einem der vorhergehenden Ansprüche, **dadurch gekennzeichnet, dass** der Polyetherrest der allgemeinen Formel (CH₂)₃O(C₂H₄O)ₓ(C₃H₆O)_{y}Q bedeutet, wobei x und y gleich oder verschieden sein können und x eine ganze Zahl zwischen 1 und 25 bedeutet und y eine ganze Zahl zwischen 0 und 25 bedeutet und Q Wasserstoff oder einen Alkylrest mit 1 bis 4 C-Atomen bedeutet.

6. Textilhilfsmittel, **dadurch gekennzeichnet, dass** es mindestens ein Polysiloxan nach einem der Ansprüche 1 bis 5 enthält.

7. Textilhilfsmittel nach Anspruch 6, **dadurch gekennzeichnet, dass** es in Form einer wässrigen Emulsion vorliegt.

8. Textilhilfsmittel nach Anspruch 7, **dadurch gekennzeichnet, dass** es mindestens einen nichtionischen und/oder kationischen Emulgator enthält.

9. Textilhilfsmittel nach einem der Ansprüche 6 bis 8, **dadurch gekennzeichnet, dass** es eine oder mehrere anorganische und/oder organische Säuren und/oder Anhydride enthält.

10. Textilhilfsmittel nach einem der Ansprüche 6 bis 9, **dadurch gekennzeichnet, dass** es mindestens ein Hydrotropikum enthält.

11. Textilhilfsmittel nach einem der Ansprüche 6 bis 10, **dadurch gekennzeichnet, dass** es 2 bis 80 Gew.-% mindestens eines Polysiloxans nach einem der Ansprüche 1 bis 5, 0 bis 40 Gew.-% mindestens eines Emulgators, 0 bis 5 Gew.-% mindestens einer anorganischen und/oder organischen Säure und/oder eines Säureanhydrids, 0 bis 40 Gew.-% mindestens eines üblichen Ausrüstungsmittels, 0 bis 20 Gew.-% mindestens eines Hydrotopikums sowie 0 bis 98 Gew.-% Wasser enthält.

12. Faser oder Gewebe, **dadurch gekennzeichnet, dass** es mindestens ein Polysiloxan nach einem der Ansprüche 1 bis 5 aufweist oder mit einem Textilhilfsmittel nach einem der Ansprüche 6 bis 11 behandelt ist.

## Claims

1. A polysiloxane of the general formula (I) 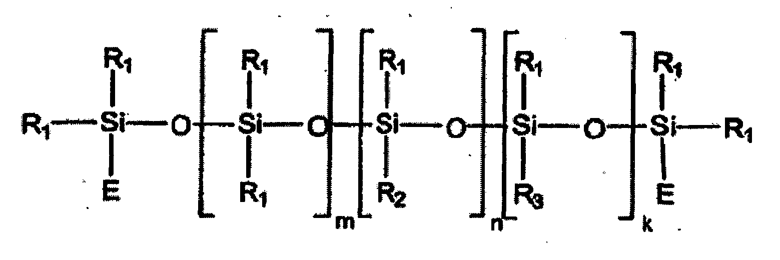 where
m is an integer from 5 to 200,
n is an integer from 0 to 25,
k is an integer from 1-25,
R₁ denotes an aliphatic C₁-C₃ radical or a phenyl radical,
R₂ denotes an aliphatic C₉-C₃₀ radical and/or a polyether radical of the general formula (CH₂)₃O(C₂H₄O)ₓ(C₃H₆O)_{y}Q, where x and y may be the same or different and each denotes an integer between 0 and 50, and Q is hydrogen or an alkyl radical with 1 to 4 carbon atoms, R₃ denotes an epoxy radical -PY or a radical MZ,
E denotes a radical MZ, R₃ or R₂,
where at least one epoxy radical -PY and one radical MZ are present per molecule, where the epoxy radical PY has an epoxidic radical Y selected from the group comprising 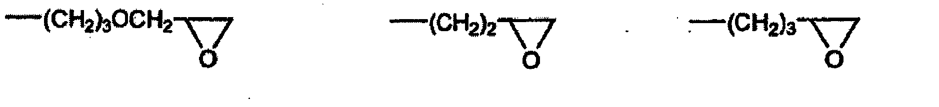 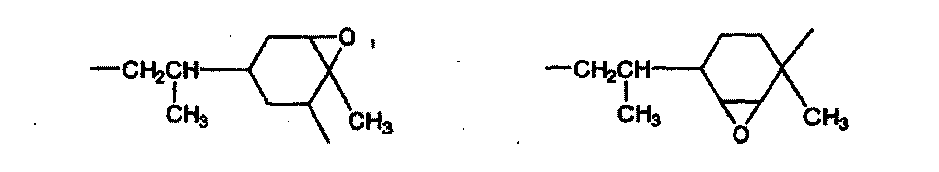 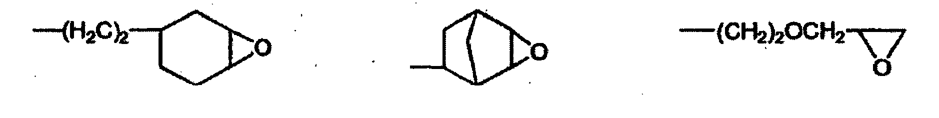 where the epoxy radical -PY is a polyether radical P of the general formula -(C₂H₄O)ₐ(C₃H₆O)_{b}(CH₄H₈O)_{c}, where a, b and c may be the same or different and each denotes an integer between 0 and 20,
where M is selected from the group comprising 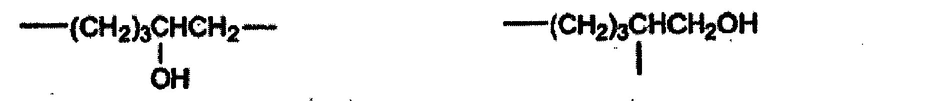 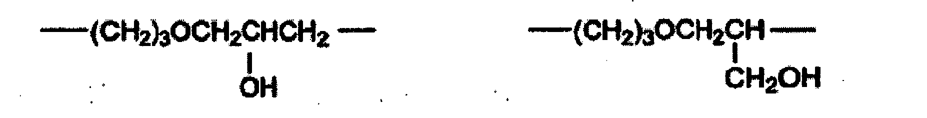 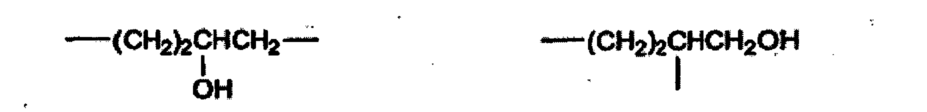 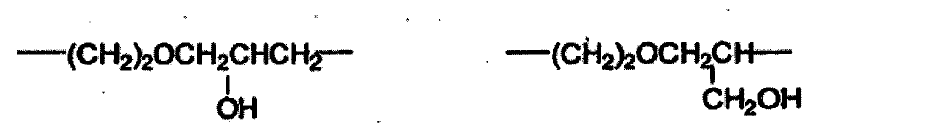 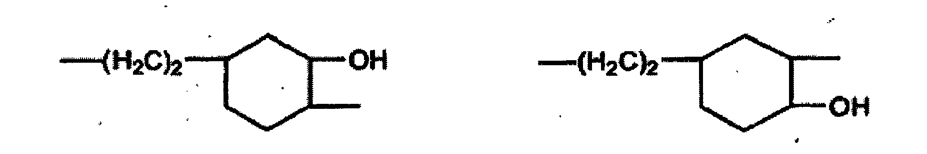 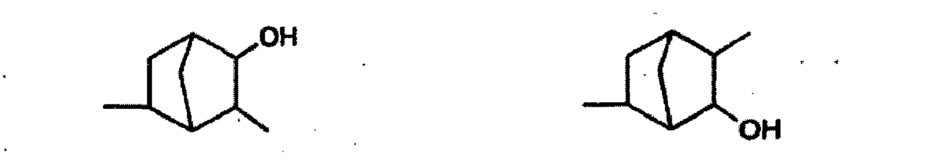 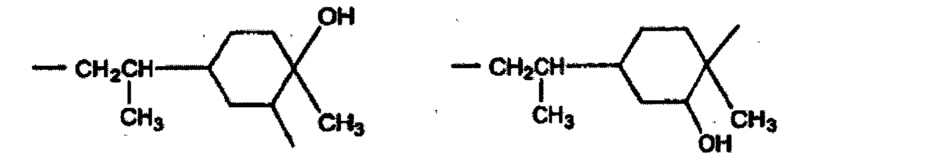 where Z is selected from the group comprising 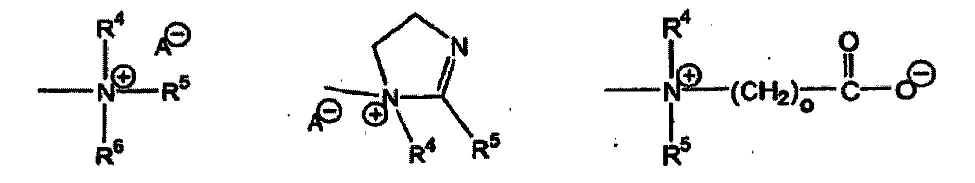 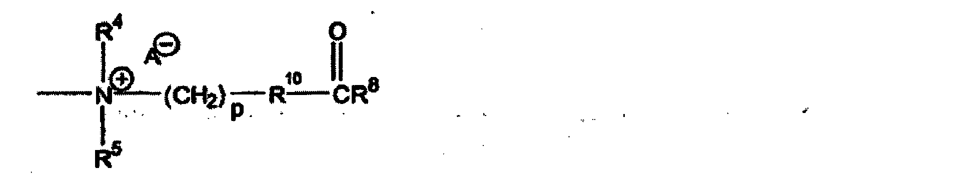 where the quaternary nitrogen atom of the radical Z is connected to the M radical via the vicinal carbon atom to the C-OH group in the M radical,
where R⁴, R⁵, R⁶ may be the same or different and may denote H, C₁ to C₂₂ alkyl, C₁ to C₂₂ alkenyl, where the alkyl or alkenyl radicals may have hydroxyl groups, where R⁸ and R⁹ may be the same or different and have the same meanings as R⁴, R⁵, R⁶ or fluorine-, chlorine- or bromine-substituted C₁ to C₁₀ alkyl radicals, where R¹⁰ denotes an -O- radical or an NR¹¹ radical with R¹¹ = H, C₁ to C₄ alkyl or C₁ to C₄ hydroxyalkyl, where ○ is an integer from 1 to 4,
where A^{e} is an organic or inorganic anion originating from a conventional, physiologically tolerable acid HX.

2. The polysiloxane according to Claim 1,
**characterized in that**
"a" is an integer between 0 and 15, "b" is an integer between 0 and 5 and "c" is an integer between 0 and 8.

3. The polysiloxane according to Claim 1 or 2,
**characterized in that**
the amount of C₂ to C₃₀ alkyl radicals, measured by the total number of radicals, is greater than 10 mol%.

4. The polysiloxane according to any one of the preceding claims,
**characterized in that**
R₂ denotes an aliphatic C₁₀ to C₂₀ radical.

5. The polysiloxane according to any one of the preceding claims,
**characterized in that**
the polyether radical has the general formula (CH₂)₃O(C₂H₄O)ₓ(C₃H₆O)_{y}Q, where x and y may be the same or different, x is an integer between 1 and 25, y is an integer between 0 and 25, and Q is hydrogen or an alkyl radical with 1 to 4 carbon atoms.

6. A textile adjuvant,
**characterized in that**
it contains at least one polysiloxane according to any one of Claims 1 to 5.

7. The textile adjuvant according to Claim 6,
**characterized in that**
it is present in the form of an aqueous emulsion.

8. The textile adjuvant according to Claim 7,
**characterized in that**
it contains at least one nonionic and/or cationic emulsifier.

9. The textile adjuvant according to any one of Claims 6 to 8,
**characterized in that**
it contains one or more organic and/or inorganic acids and/or anhydrides.

10. The textile adjuvant according to any one of Claims 6 to 9,
**characterized in that**
it contains at least one hydrotropic agent.

11. The textile adjuvant according to any one of Claims 6 to 10,
**characterized in that**
it contains 2% to 80% by weight of at least one polysiloxane according to any one of Claims 1 to 5, 0 to 40% by weight of at least one emulsifier, 0 to 5% by weight of at least one organic and/or inorganic acid and/or an acid anhydride, 0 to 40% by weight of at least one conventional finishing agent, 0 to 20% by weight of at least one hydrotropic agent and 0 to 98% by weight water.

12. A fiber or cloth,
**characterized in that**
it contains at least one polysiloxane according to any one of Claims 1 to 5 or is treated with a textile adjuvant according to any one of Claims 6 to 11.

## Revendications

1. Polysiloxane répondant à la formule générale (I) 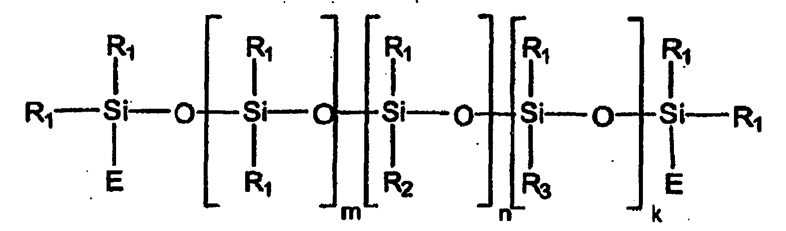 m étant un nombre entier compris entre 5 et 200,
n étant un nombre entier compris entre 0 et 25,
n étant un nombre entier compris entre 1 et 25,
R₁ représentant un radical aliphatique en C₁ à C₃ ou un radical phényle,
R₂ représentant un radical aliphatique en C₉ à C₃₀ ou un radical polyéther répondant à la formule générale (CH₂)₃O(C₂H₄O)ₓ(C₃H₆O)_{y}Q, x et y pouvant être identiques ou différents et représentant un nombre entier entre 0 et 50, et Q représentant hydrogène ou un radical alkyle ayant 1 à 4 atomes de carbone,
R₃ représentant un radical époxy -PY ou un radical MZ, E représentant un radical MZ, R₃ ou R₂,
chacune des molécules contenant au moins un radical époxy -PY et un radical MZ, le radical époxy -PY comportant un radical époxydique Y choisi dans le groupe comprenant 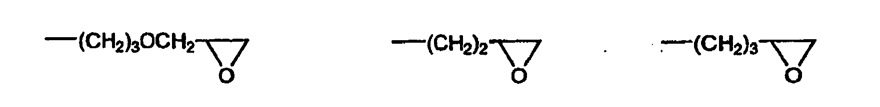 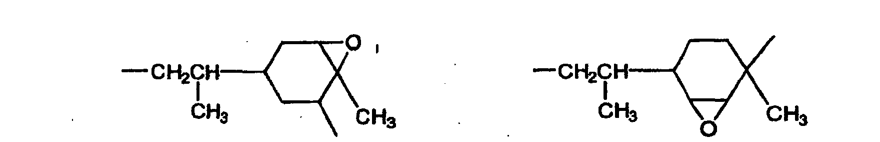 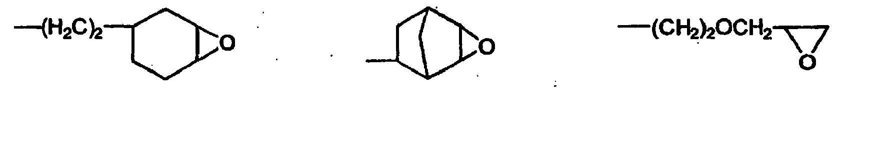 le radical époxy -PY représentant un radical polyéther P répondant à la formule générale -(C₂H₄O)ₐ(C₃H₆O)_{b}(C₄H₈O)_{c}, a, b et c pouvant être identiques ou différents et représentant chacun un nombre entier entre 0 et 20,
M étant choisi dans le groupe comprenant 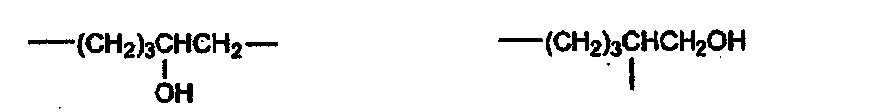 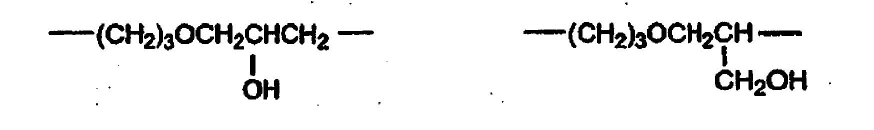 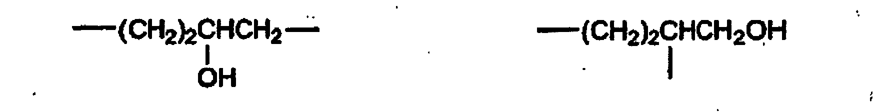 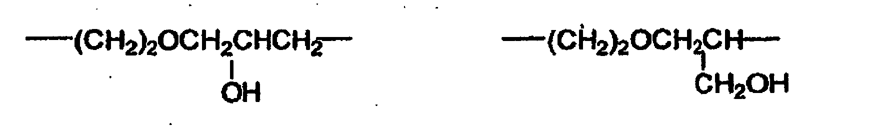 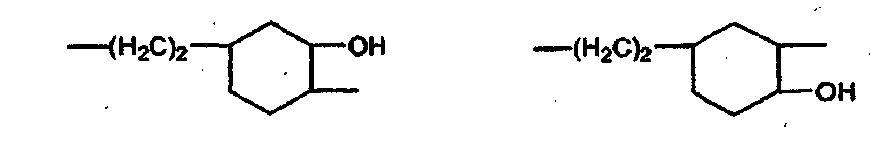 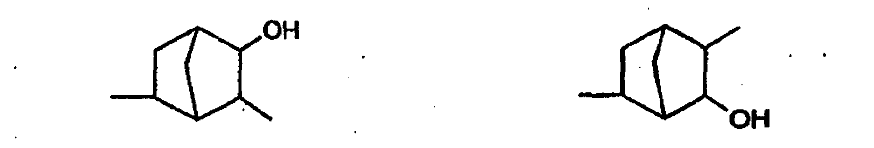 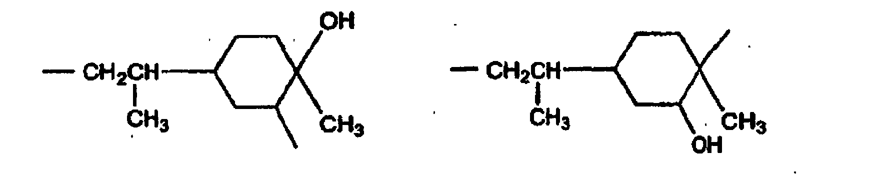 Z étant choisi dans le groupe comprenant 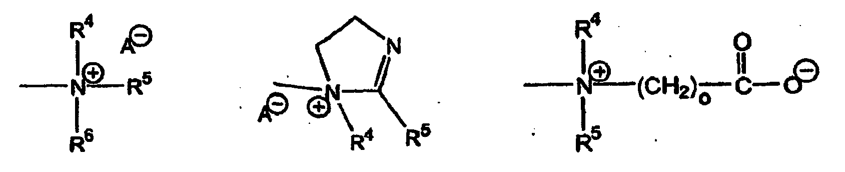 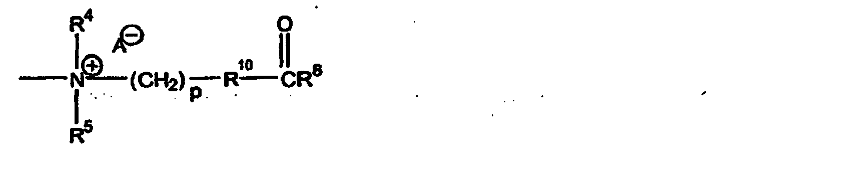 l'atome N quaternaire du radical Z étant lié au radical M par l'intermédiaire de l'atome de carbone qui est voisin du groupe C-OH au sein du radical M,
R⁴, R⁵, R⁶ pouvant être identiques ou différents et pouvant représenter H, alkyle en C₁ à C₂₂, alcényle en C₁ à C₂₂, les radicaux alkyle ou alkylène pouvant comporter des groupes hydroxyle,
R⁸, R⁹ pouvant être identiques ou différents et ayant la même signification que R⁴, R⁵, R⁶ ou bien étant des radicaux alkyle en C₁ à C₁₀ substitués avec du fluor, du chlore ou du brome,
R¹⁰ représentant un -O- ou un radical NR¹¹ avec R¹¹ = H, alkyle en C₁ à C₄ ou hydroxyalkyle en C₁ à C₄,
o étant un nombre entier compris entre 1 et 4,
A⁻ étant un anion inorganique ou organique issu d'un acide HX d'usage courant et physiologiquement bien toléré.

2. Polysiloxane selon la revendication 1, **caractérisé en ce que** a représente un nombre entier entre 0 et 15, b représente un nombre entier entre 0 et 5 et c représente un nombre entier entre 0 et 8.

3. Polysiloxane selon la revendication 1 ou 2, **caractérisé en ce que** la proportion des radicaux alkyle en C₂ à C₃₀ est supérieure à 10 % en moles, par rapport au nombre total de radicaux.

4. Polysiloxane selon l'une des revendications précédentes, **caractérisé en ce que** R₂ représente un radical aliphatique en C₁₀ à C₂₀.

5. Polysiloxane selon l'une des revendications précédentes, **caractérisé en ce que** le radical polyéther selon la formule générale représente (CH₂)₃O(C₂H₄O)ₓ(C₃H₆O)_{y}Q, x et y pouvant être identiques ou différents et x représentant un nombre entier entre 1 et 25 et y représentant un nombre entier entre 0 et 25, et Q représentant l'hydrogène ou un radical alkyle ayant 1 à 4 atomes de carbone.

6. Adjuvant textile, **caractérisé en ce qu'**il contient au moins un polysiloxane selon l'une des revendications 1 à 5.

7. Adjuvant textile selon la revendication 6, **caractérisé en ce qu'**il se présent sous forme d'une émulsion aqueuse.

8. Adjuvant textile selon la revendication 7, **caractérisé en ce qu'**il contient au moins un émulsifiant non-ionique et/ou cationique.

9. Adjuvant textile selon l'une des revendications 6 à 8, **caractérisé en ce qu'**il contient un ou plusieurs acides et/ou anhydrides de type inorganique et/ou organique.

10. Adjuvant textile selon l'une des revendications 6 à 9, **caractérisé en ce qu'**il contient au moins un agent hydrotrope.

11. Adjuvant textile selon l'une des revendications 6 à 10, **caractérisé en ce qu'**il contient 2 à 80 % en poids d'au moins un polysiloxane selon l'une des revendications 1 à 5, 0 à 40 % en poids d'au moins un émulsifiant, 0 à 5 % en poids d'au moins un acide et/ou anhydride d'acide de type inorganique et/ou organique, 0 à 40 % en poids d'au moins un agent d'apprêt conventionnel, 0 à 20 % en poids d'au moins un agent hydrotrope ainsi que 0 à 98 % en poids d'eau.

12. Fibre ou tissu, caractérisé(e) en ce qu'il/elle comporte au moins un polysiloxane selon l'une des revendications 1 à 5 ou est traité(e) avec un adjuvant textile selon l'une des revendications 6 à 11.
